# EUROPÄISCHE PATENTSCHRIFT

(11) **EP 3 490 116 B1**
(45) Veröffentlichungstag und Bekanntmachung des Hinweises auf die Patenterteilung: **12.01.2022**
(21) Anmeldenummer: 18204023.8
(22) Anmeldetag: 02.11.2018
(51) Int. Cl.: H02K 5/22, H02K 9/19, H02K 11/33, H02K 9/08, H02K 9/22

(54) **ANTRIEB MIT UMRICHTER UND KÜHLMITTEL**
DRIVE COMRPISING AN INVERTER AND COOLING MEANS
ACTIONNEUR COMPRENANT UN COMMANDE ET MOYENS DE REFROIDISSEMENT

(30) Priorität: 23.11.2017 DE 102017220970
(43) Veröffentlichungstag der Anmeldung: 29.05.2019
(73) Patentinhaber: Baumüller Nürnberg GmbH, 90482 Nürnberg (DE)
(72) Erfinder: BORMUTH, Bernd, 90482 Nürnberg (DE); GUTJAHR, Frank, 92268 Etzelwang (DE); LELKES, András, 90491 Nürnberg (DE)
(74) Vertreter: FDST Patentanwälte

(56) Entgegenhaltungen:
- EP-A2- 0 951 131
- DE-A1-102014 016 171
- JP-A- 2013 179 830
- US-A1- 2016 126 808

## Beschreibung

Die Erfindung betrifft einen Antrieb mit einem ein Motorgehäuse aufweisenden, flüssigkeitsgekühlten Elektromotor. Der Antrieb ist bevorzugt ein Torque-Antrieb, und der Elektromotor ist somit ein Torque-Motor, also ein hochpoliger, elektrischer Direktantrieb aus der Gruppe der Langsamläufer.

Industrieanlagen weisen üblicherweise Aktoren auf, die mittels eines einen Elektromotor aufweisenden Antriebs angetrieben sind. So werden beispielsweise bei der Kunststoffverarbeitung und der Kunststoffherstellung etwaige Förderschnecken oder Pressstempel üblicherweise mittels eines Elektromotors angetrieben. Hierbei wird beispielsweise ein Stempel oder eine Schnecke eines Kunststoffspritzgeräts mittels des Elektromotors bewegt. Der Elektromotor des Antriebs ist zur Vermeidung eines Verschleißes meist bürstenlos ausgestaltet und wird mittels eines Umrichters bestromt. Der Umrichter selbst weist eine Brückenschaltung auf, wobei jedem Brückenzweig eine Phase des Elektromotors zugeordnet ist. Somit ist eine elektrische Verbindung zwischen dem Umrichter und dem Elektromotor mittels eines Kabels erforderlich, wobei zumindest genauso viele zueinander elektrisch isolierte Leiter vorhanden sein müssen, wie der Elektromotor Phasen aufweist.

Der Umrichter ist meist innerhalb eines Schaltschranks angeordnet, was eine Wartung vereinfacht, insbesondere sofern die Industrieanlage mehrere derartige Antriebe aufweist. So sind in diesem Fall meist in einem einzigen Schaltschrank mehrere Umrichter angeordnet. Hierbei ist jedoch ein vergleichsweise großer Verkabelungsaufwand zwischen den einzelnen Umrichtern und den zugeordneten Elektromotoren erforderlich, weswegen die Montage derartiger Antriebe vergleichsweise zeitaufwendig ist. Zudem ist ein vergleichsweise großer Materialbedarf aufgrund der vergleichsweise großen Anzahl an Kabeln gegeben. Eine Alternative hierzu ist die Anbringung des Umrichters an dem Elektromotor, beispielsweise in einem gemeinsamen Gehäuse. Somit wird bei der Herstellung des Antriebs bereits der Umrichter mit dem Elektromotor fest verbunden und der Antrieb kann als einziges Bauteil in der Industrieanlage montiert werden. Folglich ist eine Montage vereinfacht und ein Verkabelungsaufwand praktisch nicht vorhanden. Sofern jedoch der Umrichter beschädigt ist oder eine Fehlfunktion aufweist, ist eine Demontage des vollständigen Antriebs erforderlich, weswegen eine Wartung erschwert ist.

Bei Betrieb des Antriebs entsteht Verlustwärme, insbesondere aufgrund von elektrischen Widerständen innerhalb des Elektromotors und/oder des Umrichter. Auch werden aufgrund von Schaltvorgängen des Umrichters etwaige Bestandteile erwärmt. Somit ist es erforderlich, den Antrieb zu kühlen. Hierbei wird beispielsweise ein Elektromagnet des Elektromotors mit Umgebungsluft beaufschlagt und auf diese Weise die Wärme abtransportiert. Eine Alternative hierzu ist eine Flüssigkeitskühlung des Elektromotors. Bei dieser wird eine Flüssigkeit durch den Elektromotor geleitet, welche die Wärme aufnimmt und von dem Antrieb abtransportiert. Aufgrund der erhöhten Wärmekapazität der Flüssigkeit ist eine effektivere Kühlung gegeben. Zudem ist es ermöglicht, mittels der Flüssigkeit die Wärme zu einem von dem Antrieb vergleichsweise weit beabstandeten Ort zu transportieren. Daher ist ein Betrieb des Antriebs auch über einen vergleichsweise großen Zeitraum ermöglicht, ohne dass eine übermäßige Erhitzung der Umgebung des Antriebs erfolgt.

EP 0 951 131 A2 beschreibt eine elektrische Antriebseinheit aus einem Elektromotor mit einem doppelwandigen Elektromotorgehäuse und einem umlaufendem Kühlkreislauf sowie einem Elektronikmodul mit mindestens einer zu kühlenden Funktionseinheit.

JP 2013 719830 A zeigt einen Antrieb, der einen Motor mit mehreren Wicklungen und einen Umrichter aufweist. Die einzelnen Komponenten umfassen jeweils ein Gehäuse, die miteinander verbunden sind.

In US 2016/126808 A1 ist ein Antrieb mit einem Elektromotor und einem Kühler zum Kühlen des Elektromotors offenbart. Ein Umrichter ist mit dem Elektromotor gekoppelt.

DE 10 2014 016171 A1 zeigt eine elektrische Antriebseinrichtung mit einem Elektromotor und einer Leistungselektronikvorrichtung zur Ansteuerung des Elektromotors. Ein Motorgehäuse des Elektromotors weist wenigstens einen Kühlmittelkanal zur Kühlung des Elektromotors auf.

Der Erfindung liegt die Aufgabe zugrunde, einen besonders geeigneten Antrieb anzugeben, wobei vorteilhafterweise eine Wartung und/oder Fehlerbehebung vereinfacht ist, wobei zweckmäßigerweise eine Austauschbarkeit verbessert ist, und wobei zweckmäßigerweise eine Leistung und/oder eine Zuverlässigkeit erhöht ist.

Erfindungsgemäß wird diese Aufgabe durch die Merkmale des Anspruchs 1 gelöst. Vorteilhafte Weiterbildungen und Ausgestaltungen sind Gegenstand der Unteransprüche.

Der Antrieb ist beispielsweise ein Bestandteil einer Industrieanlage, wie einer Servopresse. Mit anderen Worten wird mittels des Antriebs insbesondere eine Presse angetrieben. Alternativ hierzu wird der Antrieb bevorzugt bei der Kunststoffverarbeitung und/oder der Kunststoffherstellung verwendet. Beispielsweise wird ein Extruder oder ein sonstiger Bestandteil einer Kunststoffspritzgussmaschine, wie ein Stempel mittels des Antriebs angetrieben. Bei Betrieb wird vorzugsweise ein zu erstellendes oder zu bearbeitendes Werkstück mittels des Antriebs zumindest teilweise bearbeitet. Alternativ hierzu ist der Antrieb ein Bestandteil eines Schiffsantriebs, welcher zum Beispiel vorgesehen und eingerichtet ist, innerhalb einer Gondel an einem Rumpf eines Schiffs montiert zu werden. In einer weiteren Alternative ist der Antrieb ein Bestandteil eines Fahrrads, wie eines Pedelecs, und dient dem Vortrieb des Fahrrads.

Der Antrieb umfasst einen Elektromotor. Der Elektromotor weist beispielsweise eine Leistung zwischen 1 kW und 150 kW, zwischen 2 kW und 112 kW oder zwischen 5 kW und 50 kW und insbesondere gleich 40 kW auf, wobei jeweils zum Beispiel eine Abweichung von 10 kW, 5 kW, 2 kW oder 0 kW vorhanden ist. Geeigneterweise weist der Elektromotor eine Drehzahl, beispielsweise eine Nenndrehzahl oder maximale Drehzahl, zwischen 10 U/min. und 1.000 U/min., zwischen 50 U/min. und 500 U /min., zwischen 100 U/min. und 200 U/min. und insbesondere gleich 175 U/min. auf, wobei insbesondere eine Abweichung von 20 U/min., 10 U/min., 5 U/min. oder 0 U/min. vorhanden ist. Besonders bevorzugt weist die elektrische Maschine ein Drehmoment, beispielsweise ein Maximalund/oder Nenndrehmoment zwischen 10 Nm und 1.000 Nm, zwischen 50 Nm und 800 Nm, zwischen 200 Nm und 600 Nm, zwischen 250 Nm und 500 Nm, wobei insbesondere jeweils eine Abweichung von 50 Nm, 20 Nm, 10 Nm oder 0 Nm vorhanden ist.

Der Elektromotor ist beispielsweise ein Asynchronmotor. Besonders bevorzugt jedoch ist der Elektromotor ein Synchronmotor. Beispielsweise ist der Elektromotor bürstenbehaftet. Besonders bevorzugt jedoch ist der Elektromotor bürstenlos ausgestaltet. Der Elektromotor weist ein Motorgehäuse auf. Innerhalb des Motorgehäuses sind insbesondere ein Stator und ein Rotor des Elektromotors angeordnet. Vorzugsweise wird der Rotor zumindest abschnittsweise von dem Stator umgeben. Mit anderen Worten handelt es sich bei dem Elektromotor um einen Innenläufer. Zweckmäßigerweise ist der Rotor drehbar um eine Rotationsachse gelagert, vorzugsweise mittels Lagern, die an dem Gehäuse angebunden sind. Alternativ sind die Lager an einem etwaigen Lagerschild befestigt. Das Gehäuse ist insbesondere im Wesentlichen topfförmig oder hohlzylindrisch ausgestaltet, wobei der Querschnitt insbesondere senkrecht zu der etwaigen Rotationsachse, rund und/oder beispielsweise rechteckförmig ist. Das Motorgehäuse ist zweckmäßigerweise aus einem Metall, beispielsweise aus einem Stahl oder Aluminium, also insbesondere reinem Aluminium oder einer Aluminiumlegierung erstellt.

Der Rotor weist beispielsweise eine Anzahl an Permanentmagneten auf, die insbesondere aus einem Ferrit oder NdFeB gefertigt sind. Insbesondere sind die Permanentmagnete an einem Blechpaket angebunden, beispielsweise in dieses eingebettet oder umfangsseitig auf dieses gesetzt. Der Rotor ist zweckmäßigerweise an einer Welle befestigt, die insbesondere aus einem Stahl erstellt ist. Hierbei ist der Rotor mittels der Welle zweckmäßigerweise um die etwaige Rotationsachse drehbar gelagert. Die Welle ist vorzugsweise zumindest teilweise innerhalb des Motorgehäuses angeordnet und steht beispielsweise aus diesem über.

Der Stator des Elektromotors weist vorzugsweise eine Anzahl an Elektromagneten auf, die beispielsweise jeweils mittels einer elektrischen Spule gebildet sind, die vorzugsweise aus einem Lackdraht, beispielsweise einem Kupferlackdraht oder Aluminiumlackdraht, gewickelt sind. Die elektrischen Spulen sind zweckmäßigerweise auf ein Blechpaket des Stators aufgesetzt oder um dieses gewickelt. Die Elektromagneten sind zu einer Anzahl an Phasen, beispielsweise drei Phasen oder sechs Phasen, miteinander elektrisch verschaltet, wobei die Phasen vorzugsweise in einer Dreiecksschaltung oder Sternschaltung miteinander kontaktiert sind.

Der Elektromotor ist flüssigkeitsgekühlt. Mit anderen Worten wird eine Flüssigkeit herangezogen, um den Elektromotor bei Betrieb zu kühlen. Hierbei weist der Elektromotor vorzugsweise einen Kühl(flüssigkeits)kreislauf auf. Somit wird bei Betrieb mittels der Flüssigkeitskühlung eine übermäßige Erhitzung des Elektromotors vermieden. Beispielsweise wird die Kühlflüssigkeit durch den vollständigen Elektromotor geleitet, sodass die Flüssigkeit im Wesentlichen jeden Bereich des Elektromotors erreichen kann. Somit ist eine Kühlung vergleichsweise effizient. Alternativ hierzu weist der Elektromotor zumindest einen Kühlkanal auf, der beispielsweise zumindest teilweise mittels des Stators gebildet ist. Hierbei weist der Stator zweckmäßigerweise eine flüssigkeitsdichte Aussparung auf, die ein Bestandteil des Kühlkanals ist. Bei Betrieb wird durch den Kühlkanal die Flüssigkeit geleitet. Somit ist ein elektrischer Kurzschluss ausgeschlossen, und eine chemische Reaktion der Kühlflüssigkeit mit weiteren Bestandteilen des Elektromotors vermieden. Zudem ist eine im Wesentlichen freie Bewegung des Rotors innerhalb des Gehäuses ermöglicht.

Der Antrieb weist ferner einen Umrichter auf, der ein Umrichtergehäuse umfasst. Das Umrichtergehäuse ist zum Beispiel aus einem Blech erstellt. Alternativ hierzu ist das Umrichtergehäuse beispielsweise ein Tiefziehteil. Geeigneterweise besteht das Umrichtergehäuse aus einem Metall, beispielsweise einem Aluminium, also reinem Aluminium oder einer Aluminiumlegierung. Der Umrichter weist zweckmäßigerweise eine Elektronik auf, die innerhalb des Umrichtergehäuses angeordnet ist. Der Umrichter dient der Bestromung des Elektromotors und die Elektronik ist zweckmäßigerweise hierfür geeignet, insbesondere vorgesehen und eingerichtet. Die Elektronik weist zweckmäßigerweise zumindest einen Leistungshalbleiterschalter auf, insbesondere eine Anzahl an derartigen Leistungshalbleiterschaltern, die vorzugsweise in einer Brückenschaltung, beispielsweise in einer B6- oder B4-Schaltung miteinander elektrisch kontaktiert sind. Insbesondere sind somit unterschiedliche Brückenzweige gebildet, wobei jeder Brückenzweig jeweils einer der Phasen des Elektromotors zugeordnet ist. Die Leistungshalbleiterschalter sind insbesondere Feldeffekttransistoren, beispielsweise MOSFETs oder besonders bevorzugt IGBTs.

Der Umrichter ist beispielsweise ein Frequenzumrichter und/oder rückspeisefähig ausgestaltet. Besonders bevorzugt weist der Umrichter einen Gleichrichter, insbesondere einen Diodengleichrichter oder einen gesteuerten/geregelten Gleichrichter, und einen nachgeschalteten Wechselrichter auf, wobei der Wechselrichter zweckmäßigerweise die Brückenschaltung aufweist, die elektrisch mit dem Elektromotor kontaktiert ist. Beispielsweise ist zwischen dem Gleichrichter und dem Wechselrichter ein Gleichspannungszwischenkreis gebildet, der vorzugsweise einen Zwischenkreiskondensator, insbesondere zur Stabilisierung einer Gleichspannung, aufweist. Vorzugsweise ist der Umrichter vorgesehen und eingerichtet, mit einer Wechselspannung, insbesondere einer Netzspannung kontaktiert zu werden, die beispielsweise eine Wechselspannung von 400 Volt oder 480 Volt aufweist. Zweckmäßigerweise ist die Netzspannung, also die Speisespannung des Gleichrichters, dreiphasig ausgestaltet.

Der Umrichter ist ferner flüssigkeitsgekühlt. Mit anderen Worten dient eine Kühlflüssigkeit zur Kühlung des Umrichters, wobei der Umrichter beispielsweise einen Kühlmittelkreislauf (Kühlflüssigkeitskreislauf) aufweist. Zweckmäßigerweise sind die etwaig vorhandenen Leistungshalbleiterschalter, vorzugsweise sämtliche Leistungshalbleiterschalter, thermisch mit dem Kühlmittelkreislauf kontaktiert. Beispielsweise ist das vollständige Umrichtergehäuse mit der Kühlflüssigkeit befüllt. Besonders bevorzugt jedoch ist die Kühlflüssigkeit in einem (Kühl-)Kanal oder dergleichen angeordnet, sodass bei der Fertigung der etwaigen Elektronik des Umrichters nicht auf eine Kurzschlusssicherheit hinsichtlich der Kühlflüssigkeit geachtet werden muss. Zumindest jedoch weist der Antrieb einen Kühlmittelkreislauf auf, mittels dessen der Umrichter flüssigkeitsgekühlt ist.

Das Umrichtergehäuse ist lösbar an dem Motorgehäuse angebunden. Beispielsweise ist das Umrichtergehäuse auf das Motorgehäuse gesteckt. Alternativ oder in Kombination hierzu ist ein Form- und/oder Kraftschluss zwischen den beiden Gehäusen realisiert. Besonders bevorzugt sind die beiden Gehäuse miteinander verschraubt, was eine vergleichsweise einfache Montage und sichere Anbindung ermöglicht. Das Umrichtergehäuse ist beispielsweise an einem etwaigen B-seitigen Lagerschild des Motorgehäuses angebunden. Alternativ hierzu ist das Umrichtergehäuse umfangsseitig bezüglich des Motorgehäuses angeordnet und an diesem dort angebunden, beispielsweise direkt oder mittels eines Adapters. Beispielsweise weist das Motorgehäuse und das Umrichtergehäuse zwei zueinander korrespondierende Stecker auf, mittels derer eine elektrische Kontaktierung des Umrichters mit dem Elektromotor erfolgt, insbesondere der etwaigen Elektronik mit den etwaig vorhandenen Phasen. Somit ist eine Montage vereinfacht. Mit anderen Worten ist die Elektronik, also der Umrichter, insbesondere in den Elektromotor integriert.

Aufgrund der Anbindung des Motorgehäuses an dem Umrichtergehäuse ist eine Herstellung des Antriebs vereinfacht. Auch ist eine Montage des Antriebs, insbesondere einer Industrieanlage, vergleichsweise unkompliziert. Aufgrund der lösbaren Verbindung ist ein Austausch des Umrichters vereinfacht. So ist es ermöglicht, bei einem Defekt des Umrichters diesen von dem Elektromotor zu lösen, ohne den Elektromotor selbst zu demontieren. Daher sind eine Fehlerbehebung und eine Austauschbarkeit verbessert. Aufgrund der Flüssigkeitskühlung ist es zudem ermöglicht, einen Antrieb mit einer vergleichsweise hohen Leistung bereitzustellen. Zudem ist aufgrund der Flüssigkeitskühlung eine Zuverlässigkeit erhöht und ein Betrieb auch in Umgebungen mit einer vergleichsweise hohen Umgebungstemperatur ermöglicht.

Der Elektromotor ist bevorzugt ein Servomotor. Der Antrieb ist besonders bevorzugt ein Torque-Antrieb. Somit ist der Elektromotor ein Torque-Motor, also ein hochpoliger elektrischer Direktantrieb aus der Gruppe der Langsamläufer. Der Torque-Motor weist zweckmäßigerweise mehr als 20, 40 oder 60 Pole auf.

Beispielsweise weist das Umrichtergehäuse und das Motorgehäuse zueinander korrespondierende Stecker auf, mittels derer eine elektrische Kontaktierung der Phasen des Elektromotors mit der Elektronik des Umrichters erfolgt. Alternativ hierzu weist der Umrichter beispielsweise eine zu der Anzahl der Phasen korrespondierende Anzahl an Klemmen auf, wobei zur elektrischen Kontaktierung Phasenanschlüsse des Elektromotors mit den Klemmen des Umrichters elektrisch kontaktiert und an diesen mechanisch festgelegt werden.

Als Kühlflüssigkeit wird beispielsweise Wasser herangezogen, was Herstellungskosten reduziert und eine Montage vereinfacht. Auch ist eine Umweltverträglichkeit erhöht. Alternativ hierzu ist die Kühlflüssigkeit ein Öl, wobei hierbei insbesondere bei einer etwaigen Leckage ein Kurzschluss oder dergleichen vermieden ist. Zweckmäßigerweise ist der Kühlmittelkreislauf des Elektromotors der gleiche Kühlmittelkreislauf wie der Kühlmittelkreislauf zur Kühlung des Umrichters. Zumindest jedoch sind diese bevorzugt fluidtechnisch miteinander gekoppelt, beispielsweise parallel zueinander oder seriell zueinander geschaltet. Hierbei erfolgt vorzugsweise zunächst eine Kühlung des Umrichters und im Anschluss hieran eine Kühlung des Elektromotors. Somit ist es ermöglicht, eine Elektronik zu verwenden, die eine vergleichsweise niedrige Betriebstemperatur aufweist, was Herstellungskosten reduziert.

Der Antrieb weist eine Kühlplatte auf, die außerhalb des Motorgehäuses angeordnet ist. Hierbei dient die Kühlplatte der Kühlung des Umrichters, insbesondere zumindest eines Teil der etwaigen Elektronik des Umrichters. Zweckmäßigerweise ist die Elektronik thermisch mit der Kühlplatte kontaktiert, beispielsweise direkt oder mittels weiterer Bauteile, die eine vergleichsweise hohe Wärmeleitfähigkeit aufweisen. Vorzugsweise ist die Wärmeleitfähigkeit des Bauteil λ>10, λ>50 oder λ>100. Die Kühlplatte ist beispielsweise aus einem Metall erstellt, vorzugsweise aus einem Aluminium oder einem Stahl. Die Kühlplatte weist einen Kühlkanal auf. Dieser ist beispielsweise mäanderförmig ausgestaltet und/oder weist mehrere Unterabschnitte auf, die zum Beispiel zueinander parallel fluidtechnisch geschaltet sind. Alternativ hierzu weist die Kühlplatte mehrere derartige Kühlkanäle auf. Der Kühlkanal weist einen Zufluss und einen Abfluss auf, wobei bei Betrieb durch den Zufluss die Kühlflüssigkeit eingeleitet und durch den Abfluss ausgeleitet wird.

Der Abfluss des Kühlkanals der Kühlplatte ist fluidtechnisch mit einem Zufluss eines Kühlkanals des Elektromotors verbunden. Der Kühlkanal des Elektromotors verläuft vorzugsweise zumindest teilweise im Inneren des Motorgehäuses, und insbesondere durch einen etwaigen Stator des Elektromotors hindurch. Der Kühlkanal des Elektromotors ist beispielsweise mäanderförmig ausgestaltet und/oder weist mehrere Unterabschnitte auf, die beispielsweise zueinander parallel geschaltet sind. Somit dient der gleiche Kühlkreislauf sowohl der Kühlung des Umrichters als auch der Kühlung des Elektromotors, wobei zunächst mittels der Kühlplatte der Umrichter und im Anschluss hieran der Elektromotor gekühlt wird, weswegen eine vergleichsweise effiziente Kühlung des Umrichters erfolgt. Somit kann der Umrichter mit Bauteilen gefertigt werden, die eine vergleichsweise niedrige Betriebstemperatur aufweisen. Aufgrund der fluidtechnischen Kopplung der beiden Kühlkanäle ist bei der Montage des Antriebs lediglich ein Koppeln des Zuflusses der Kühlplatte und des Abflusses des Kühlkanals des Elektromotors mit externen Bestandteilen erforderlich. Ferner ist auf diese Weise auch eine Ausbildung von etwaigen Leckagen oder Undichtigkeitsstellen verhindert.

Die Kühlplatte bildet zumindest teilweise eine Wand des Umrichtergehäuses. Insbesondere bildet die Kühlplatte eine vollständige Wand des Umrichtergehäuses, welches beispielsweise im Wesentlichen quaderförmig ausgestaltet ist. Somit wird zur Montage des Umrichtergehäuses an dem Motorgehäuse die Verbindung zwischen den beiden Kühlkanälen erstellt, und die fluidtechnische Verbindung ist somit lösbar ausgestaltet. Zweckmäßigerweise liegt die Elektronik innerhalb des Umrichtergehäuses zumindest teilweise an der Kühlplatte mechanisch direkt an, sodass diese vergleichsweise effizient thermisch mit der Kühlplatte gekoppelt ist. Insbesondere ist zwischen diesem Teil der Elektronik und der Kühlplatte eine Wärmeleitpaste angeordnet. Zumindest jedoch liegt zweckmäßigerweise der etwaige Leistungshalbleiter an der Kühlplatte mechanisch direkt an und/oder ist thermisch mit dieser kontaktiert. Auf diese Weise ist eine Kühlung des Umrichters verbessert.

Zur Montage des Umrichters an dem Elektromotor ist somit sowohl ein Anschluss etwaiger elektrischer Leitungen, zum Beispiel einer Motorleitung oder Sensorleitung, wie eines Temperatursensors eines Gebers, an den Elektromotor erforderlich. Ferner wird der Umrichter mit einem etwaigen Netzanschluss oder Busanschluss elektrisch und/oder signaltechnisch verbunden, die beispielsweise ein Bestandteil der etwaigen Industrieanlage sind. Auch wird der Abfluss des Kühlkanals der Kühlplatte fluidtechnisch mit dem Zufluss des Kühlkanals des Elektromotors verbunden, und der Zufluss des Kühlkanals der Kühlplatte wird fluidtechnisch mit einem Anschluss der etwaigen Industrieanlage oder einem sonstigen Bauteil der Umgebung fluidtechnisch gekoppelt. Da die Kühlplatte zumindest teilweise die Wand des Umrichtergehäuses bildet, ist eine thermische Anbindung der Elektronik des Umrichters an der Wand vergleichsweise effizient, sodass eine Kühlung verbessert ist. Zudem ist es ermöglicht, eine derartige Anbindung unabhängig von dem Elektromotors zu realisieren, beispielsweise in einer Fertigungsstraße für den Umrichter.

Das Motorgehäuse weist eine Halteplatte auf. Zur Montage wird das Umrichtergehäuse zweckmäßigerweise auf die Halteplatte gesetzt und an dieser befestigt, beispielsweise verschraubt. Die Halteplatte wird mit der Kühlplatte verschraubt. Aufgrund der Halteplatte erfolgt insbesondere zumindest teilweise ein thermisches Trennen der Kühlplatte von dem Motorgehäuse, sodass ein Temperatureintrag von dem Elektromotor in den Umrichter verringert ist. Die Halteplatte ist beispielsweise im Wesentlichen waagrecht angeordnet, was eine Montage vereinfacht. Insbesondere weist die Halteplatte zumindest die Größe der Wand oder der Kühlplatte auf, sodass das Umrichtergehäuse vergleichsweise stabil angeordnet ist. Da die Kühlplatte selbst mit der Halteplatte des Motorgehäuses verschraubt wird, ist eine fluidtechnische Kopplung der beiden Kühlkanäle vereinfacht.

Die Halteplatte umgreift das Umrichtergehäuse zumindest teilweise. Geeigneterweise weist die Halteplatte einen im Wesentlichen U-förmigen Querschnitt auf, wobei die zueinander parallelen Schenkel der U-Form zumindest abschnittsweise das Umrichtergehäuse stabilisieren. Mit anderen Worten liegen die zueinander parallelen Kanten der Halteplatte an dem Umrichtergehäuse an. Vorzugsweise umgreift die Halteplatte lediglich die Kühlplatte oder einen Teil hiervon. Somit wird das Umrichtergehäuse mittels der Halteplatte stabilisiert, und eine Position des Umrichtergehäuses bezüglich des Motorgehäuses ist vorgegeben, was eine Montage vereinfacht. Zudem ist eine fluidtechnische Verbindung zwischen den beiden Kühlkanälen verbessert, und eine Belastung der Verbindungsstelle bei Betrieb und bei etwaigen Vibrationen ist verringert.

Innerhalb des Umrichtergehäuses ist zweckmäßigerweise ein Lüfter angeordnet, der beispielsweise ein Bestandteil des Umrichters ist. Der Lüfter ist vorzugsweise ein elektromotorischer Lüfter und weist somit ein Lüfterrad auf, welches mittels eines (weiteren) Elektromotors angetrieben ist. Die Steuerung des weiteren Elektromotors erfolgt zweckmäßigerweise mittels der etwaigen Elektronik des Umrichters. Bei Betrieb wird mittels des Lüfterrads bevorzugt ein Bestandteil des Umrichters mit einem Luftstrom beaufschlagt. Zweckmäßigerweise werden etwaige elektrische und/oder elektronische Bauteile der Elektronik mittels des Luftstroms beaufschlagt, vorzugsweise der etwaig vorhandene Leistungshalbleiterschalter, der vorzugsweise als IGBT ausgestaltet ist. Somit erfolgt zusätzlich zur Flüssigkeitskühlung eine Luftkühlung des Umrichters, sodass ein Hitzestau vermieden ist.

Folglich ist ein vergleichsweise sicherer Betrieb des Antriebs ermöglicht, auch bei vergleichsweise großen Betriebsdauern.

Insbesondere erfolgt ein Betrieb des Lüfters in Abhängigkeit einer innerhalb des Umrichtergehäuses vorherrschenden Temperatur und/oder einer Temperatur eines bestimmten Bestandteils des Umrichters, wie beispielsweise des Leistungshalbleiters. Beispielsweise erfolgt ein Betrieb des Lüfters in Abhängigkeit einer Leistungsanforderung an den Antrieb. Insbesondere wird eine Drehzahl des Lüfters eingestellt und/oder geregelt. Mit anderen Worten wird die Drehzahl variiert. Alternativ hierzu erfolgt lediglich ein Ein- und/oder Ausschalten des Lüfters, also eine binäre Einstellung.

Beispielsweise weist das Umrichtergehäuse ein Schlitz oder eine Anzahl an Schlitzen oder dergleichen auf, durch die mittels des Lüfters bei Betrieb Luft angesaugt und/oder auf die Außenseite des Umrichtergehäuses bewegt wird. Besonders bevorzugt jedoch ist das Umrichtergehäuse luftdicht oder im Wesentlichen luftdicht ausgestaltet. Aufgrund der luftdichten Ausgestaltung des Umrichtergehäuses sind Umwelteinflüsse auf sich innerhalb des Umrichtergehäuses befindenden Bestandteilen des Umrichters verringert, was eine Robustheit des Antriebs erhöht. Bei Betrieb des Lüfters erfolgt eine Umwälzung der innerhalb des Umrichtergehäuses vorhandenen Luft, sodass diese über Bereiche des Umrichtergehäuses streicht, welche flüssigkeitsgekühlt sind. Insbesondere wird hierbei die Luft entlang der Kühlplatte oder hiermit thermisch kontaktieren Bestandteilen des Umrichters bewegt, wie einer Wand des Umrichtergehäuses. Die Bestandteile weisen zweckmäßigerweise Kühlrippen auf, was einen Wärmeaustausch verbessert. Aufgrund der Zirkulation ist eine Temperaturverteilung innerhalb des Umrichtergehäuses vergleichmäßigt. Zudem ist auch ein Abtransport der Wärme aus dem Umrichtergehäuse über weitere Wände des Umrichtergehäuses aufgrund der Zirkulation ermöglicht.

Vorzugsweise sind bestimmte Bestandteile des Umrichters, wie insbesondere der etwaig vorhandenen Leistungshalbleiter thermisch mit der etwaig vorhandenen Kühlplatte kontaktiert. Folglich erfolgt ein Wärmeabtransport direkt auf die Kühl-flüssigkeit. Eine in eine andere Richtung abgestrahlte Wärme wird aufgrund des Luftstroms mittels des Lüfters abtransportiert und in einen weiteren Bereich des Umrichtergehäuses abgeführt, welcher beispielsweise ebenfalls flüssigkeitsgekühlt ist.

Beispielsweise ist die etwaige Welle, an der der etwaige Rotor beispielsweise drehfest befestigt ist, eine Vollwelle. Besonders bevorzugt jedoch ist die Welle als Hohlwelle ausgestaltet. Mit anderen Worten weist der Elektromotor die Hohlwelle auf. Somit ist die Welle im Wesentlichen hohlzylindrisch ausgestaltet. Infolgedessen ist ein Gewicht der Welle reduziert, was eine Dynamik des Antriebs erhöht. Vorzugsweise weist die Hohlwelle einen Innendurchmesser auf, der größer als die Hälfte des Durchmessers des Motorgehäuses ist. Somit ist mittels des Antriebs ein vergleichsweise großes Drehmoment bei Betrieb bereitgestellt.

Nachfolgend werden Ausführungsbeispiele der Erfindung anhand einer Zeichnung näher erläutert. Darin zeigen:
- Fig. 1: schematisch in einer Schnittdarstellung einen Antrieb mit einem Elektromotor und einem Umrichter,
- Fig. 2: perspektivisch eine weitere Ausgestaltungsform des Antriebs,
- Fig. 3: den Antrieb gemäß Fig. 2 aus einer weiteren Perspektive,
- Fig. 4: schematisch in einer Schnittdarstellung den Umrichter des in Fig. 2 gezeigten Antriebs, und
- Fig. 5: gemäß Fig.2 den Antrieb mit dem von dem Elektromotor gelöstem Umrichter.

Einander entsprechende Teile sind in allen Figuren mit den gleichen Bezugszeichen versehen.

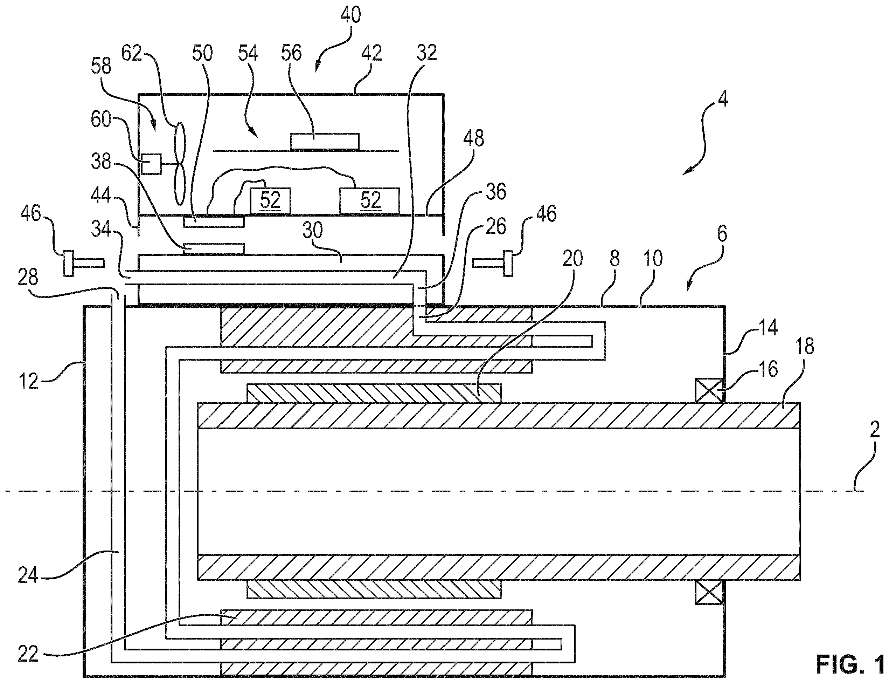

In Fig. 1 ist ein einer Schnittdarstellung längs einer Rotationsachse 2 ein Antrieb 4 einer Industrieanlage gezeigt. Der Antrieb weist eine Leistung von 5 kW auf und ist im Montagezustand an ein nicht näher dargestelltes Versorgungsnetzwerk mit einem Wechselstrom von 480 Volt angeschlossen. Der Antrieb 4 weist einen Elektromotor 6 auf, der ein Torque-Motor ist, und somit ein hochpoliger, elektrischer Direktantrieb aus der Gruppe der Langsamläufer. Der Elektromotor 6 ist ein bürstenlos ausgestalteter Gleichstrommotor. Der Elektromotor 6 weist ein hohlzylindrisches Motorgehäuse 8 auf, welches topfförmig ausgestaltet ist und somit einen hohlzylindrischen Abschnitt 10 aufweist, der konzentrisch zur Rotationsachse 2 entlang dieser angeordnet ist. Ein Ende des hohlzylindrischen Abschnitts 10, nämlich das B-seitige Ende, ist mittels eines Topfbodens 12 verschlossen. Auf der dem Topfboden 12 gegenüberliegenden Seite ist das Motorgehäuse 8 mittels eine A-seitigen Lagerschilds 14 verschlossen, an dem ein Lager 16 in Form eines Wälzlagers, wie eines Kugellagers, angebunden ist. Mittels des Lagers 16 und einem nicht näher dargestellten weiteren Lager ist eine Hohlwelle 18 drehbar um die Rotationsachse 2 gelagert, wobei die Hohlwelle 18 konzentrisch zur Rotationsachse 2 angeordnet ist. Der Durchmesser der Hohlwelle 18, beispielsweise der Innen- oder Außendurchmesser, ist größer als die Hälfte des Durchmessers der Motorgehäuses 8.

An der Hohlwelle 18 ist ein Rotor 20 mit einem Blechpaket und darin eingebetteten, nicht näher dargestellten Permanentmagneten drehfest angebunden. Der Rotor 20 ist ebenfalls hohlzylindrisch ausgestaltet und konzentrisch zur Rotationsachse 2 angeordnet. Der Rotor 20 ist umfangsseitig von einem Stator 22 umgeben, der an der Innenwand des Motorgehäuses 8 befestigt ist. Der Stator 22 weist ebenfalls ein Blechpaket mit parallel zur Rotationsachse 2 aufeinander gestapelten Blechen und darin eingebettete Elektromagneten auf, die zu insgesamt drei Phasen miteinander elektrisch kontaktiert sind. Die drei Phasen sind zu einer Dreiecks- oder Sternschaltung miteinander verschaltet.

Der Elektromotor 6 weist ferner einen Kühlkanal 24 mit einem Zufluss 26 und einem Abfluss 28 auf, wobei zwischen diesen eine fluidtechnische Verbindung vorhanden ist. Der Zufluss 26 und der Abfluss 28 des Kühlkanals 24 des Elektromotors 6 sind mittels des Motorgehäuses 8 gebildet, und der Kühlkanal 24 des Elektromotors 6 ist durch den Stator 22 mäanderförmig geführt. Ferner verläuft der Kühlkanal 24 in weiteren Bestandteilen des Elektromotors 6, ist jedoch von der Welle 18 und dem Rotor 20 beabstandet. Der Kühlkanal 24 ist zumindest teilweise mittels des Stators 22 sowie eines Rohrs gebildet, welches aus einem Stahl oder Aluminium gefertigt ist. Die nicht näher dargestellten Elektromagneten des Stators 22 sind thermisch mit dem Kühlkanal 24 des Elektromotors 6 verbunden, sodass bei Betrieb ein Wärmeaustausch zwischen den Elektromagneten und einer sich innerhalb des Kühlkanals 24 des Elektromotors 6 befindende Kühlflüssigkeit stattfindet.

An dem hohlzylindrischen Abschnitt 10 des Motorgehäuses 8 ist außenseitig eine tangential zu dem hohlzylindrischen Abschnitt 10 verlaufende Kühlplatte 30 angeformt. Mit anderen Worten ist die Kühlplatte 30 außerhalb des Motorgehäuses 8 angeordnet und unlösbar an dem Motorgehäuse 8 angebunden. Die Kühlplatte 30 weist einen Kühlkanal 32 mit einem Zufluss 34 und einem Abfluss 36 auf. Der Abfluss 36 des Kühlkanals 32 der Kühlplatte 30 mündet in den Zufluss 26 des Kühlkanals 24 des Elektromotors 6. Somit ist der Abfluss 36 des Kühlkanals 32 der Kühlplatte 30 fluidtechnisch mit dem Zufluss 26 des Kühlkanals 24 des Elektromotors 6 verbunden, und die beiden Kühlkanäle 24, 32 24- gehen ineinander über. Der Zufluss 34 des Kühlkanals 32 der Kühlplatte 30 mündet an einer Außenseite der Kühlplatte 30 im Bereich des Abflusses 28 des Kühlkanals 24 des Elektromotors 6. Die Kühlplatte 30 weist ferner einen ersten Stecker 38 mit einer Anzahl an nicht näher dargestellten Anschlüssen auf, von denen jeweils einer mit einer der Phasen des Stators 22 mittels nicht näher dargestellten Leitungen elektrisch verbunden ist.

Der Antrieb 4 weist ferner einen Umrichter 40 mit einem luftdicht und im Wesentlichen quaderförmig ausgestalteten Umrichtergehäuse 42 auf, das aus einem Aluminium erstellt ist. Im Montagezustand ist das Umrichtergehäuse 42 auf die Kühlplatte 30 aufgesetzt. Das Umrichtergehäuse 42 weist Laschen 44 auf, die im Montagezustand die Kühlplatte 30 zumindest teilweise umgreifen. Hierbei wird das Umrichtergehäuse 42 mittels Schrauben 46, die durch die Laschen 44 hindurch reichen, mit der Kühlplatte 30 verschraubt, sodass das Umrichtergehäuse 42 lösbar an dem Motorgehäuse 8 über die Kühlplatte 30 angebunden ist. Eine Wand 48 des Umrichtergehäuses 42 liegt hierbei vollflächig an der Kühlplatte 30 an, sodass das Umrichtergehäuse 42 thermisch mit der Kühlplatte 30 kontaktiert ist. In einer nicht näher dargestellten Ausführungsform ist zwischen der Wand 48 und der Kühlplatte 30 zur besseren Wärmeleitfähigkeit eine Wärmeleitpaste oder ein Wärmeleitpad angeordnet.

Die Wand 48 weist ferner einen zweiten Stecker 50 mit zu dem ersten Stecker 38 korrespondierenden Anschlüssen auf, die im Montagezustand ineinander greifen. Mit dem zweiten Stecker 50 sind innerhalb des Umrichtergehäuses 42 angeordnete Leistungshalbleiterschalte 52 elektrisch kontaktiert. Die Leistungshalbleiterschalter 52 in Form von IGBTs sind Bestandteile einer Elektronik 54 des Umrichters und zu einer Brückenschaltung, nämlich einer B6-Schaltung miteinander verschaltet. Hierbei liegen die Leistungshalbleiterschalter 52 innenseitig an der Wand 48 an und sind thermisch mit dieser kontaktiert. Somit wird eine bei Betrieb entstehende Verlustwärme der Leistungshalbleiterschalter 42 über die Wand 48 zu der Kühlplatte 30 abgeführt. Die Elektronik 54 weist ferner eine Steuerschaltung 56 auf, mittels derer die Leistungshalbleiterschalter 52 in Abhängigkeit von bestimmten Anforderungen betätigt wird. Die Anforderungen ergeben sich hierbei aus einer Vorgabe einer nicht näher dargestellten Prozesssteuerung sowie anhand von Sensorsignalen, die mittels Sensoren des Elektromotors 6 ermittelt werden. Auch diese Sensorsignale werden über die beiden Stecker 38,50 übertragen. Innerhalb des Umrichtergehäuses 42 ist ein Lüfter 58 mit einem mittels eines weiteren Elektromotors 60 angetriebenen Lüfterrad 62 angeordnet. Der weitere Elektromotor 60 des Lüfters 58 wird ebenfalls mittels der Elektronik 54 gesteuert. Der Umrichter 40 ist beispielsweise mit einem weiteren Temperatursensor, einer Geberleitung, einem Netzanschluss und/oder einem Busanschluss elektrisch und/oder signaltechnisch verbunden.

Zur Montage wird der Umrichter 40 mit dem Versorgungsnetzwerk elektrisch gekoppelt, sodass an dem Umrichter, insbesondere an dem Leistungshalbleiterschalter 52 oder einem nicht näher dargestellten Gleichrichter die mittels des Versorgungsnetzwerks bereitgestellte Wechselspannung anliegt. Ferner wird der Zufluss 34 des Kühlkanals 32 der Kühlplatte 30 und der Abfluss 28 des Kühlkanals 24 des Elektromotors 6 fluidtechnisch mit Fluidleitungen der Industrieanlage gekoppelt und eine Kühlflüssigkeit durch die beiden Kühlkanäle 24, 32 geleitet, wobei der Eintritt der Kühlflüssigkeit über den Zulauf 34 des Kühlkanals 32 der Kühlplatte 30 und der Ablauf über den Abfluss 28 des Kühlkanals 24 des Elektromotors 6 erfolgt. Somit wird mittels der Kühlflüssigkeit, wobei Wasser als Kühlflüssigkeit verwendet wird, Wärme von der Kühlplatte 30 sowie von dem Stator 22 abgeführt. Dabei wird die vergleichsweise kühle Kühlflüssigkeit zunächst durch die Kühlplatte 30 und erst im Anschluss durch den Elektromotor 6 geleitet, sodass die Kühlplatte 30 eine niedrigere Temperatur als der Stator 22 aufweist.

Mittels der Elektronik 54 wird die mittels des Versorgungsnetzwerks bereitgestellte elektrische Spannung zunächst in eine Gleichspannung gewandelt und im Anschluss hieran wird mittels der Elektronik 54, insbesondere mittels der Leistungshalbleiterschalter 52, daraus ein Wechselstrom erstellt. Dieser wird über die Stecker 38, 50 zu den Elektromagneten des Stators 22 geleitet, welche sich aufgrund eines internen Widerstandes erwärmen. Diese Wärme wird hierbei der Kühlflüssigkeit abgeführt. Mittels des Umrichters 40 wird eine elektrische Spannung von 365 Volt an den einzelnen Phasen des Elektromotors 6 angelegt, wobei der Stromfluss zwischen 10 Ampere und 15 Ampere ist. Aufgrund des angelegten Stromes ergibt sich ein rotierendes Magnetfeld, welches mit dem Rotor 20 wechselwirkt und die Hohlwelle 18 in eine Rotationsbewegung um die Rotationsachse 2 versetzt. Diese weist hierbei ein Drehmoment von 265 Nm auf.

Die in den Leistungshalbleiterschaltern 52 entstehende Verlustwärme wird über die Wand 48 zu der Kühlplatte 30 abgeführt, sodass diese gekühlt werden. Mittels des Lüfters 58 wird innerhalb des Umrichtergehäuses 40 ein Luftstrom erzeugt, mittels dessen die Leistungshalbleiterschalter 52 und weitere Bereiche der Elektronik 54 beaufschlagt werden. Infolgedessen zirkuliert die Luft innerhalb des Umrichtergehäuses 40, und Wärme wird von der Elektronik 54 abtransportiert. Der auf diese Weise erstellte Luftstrom kommt ebenfalls in Kontakt mit der Wand 48, sodass die Wärme des Luftstroms über die Wand 48 zu der Kühlplatte 30 abgeführt wird. Zusammenfassend ist somit der Elektromotor 6 und der Umrichter 40 flüssigkeitsgekühlt.

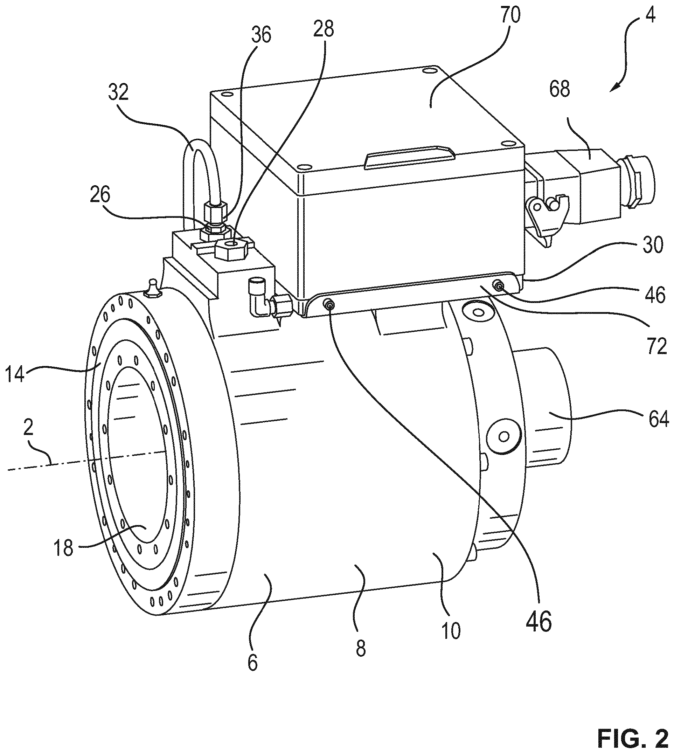

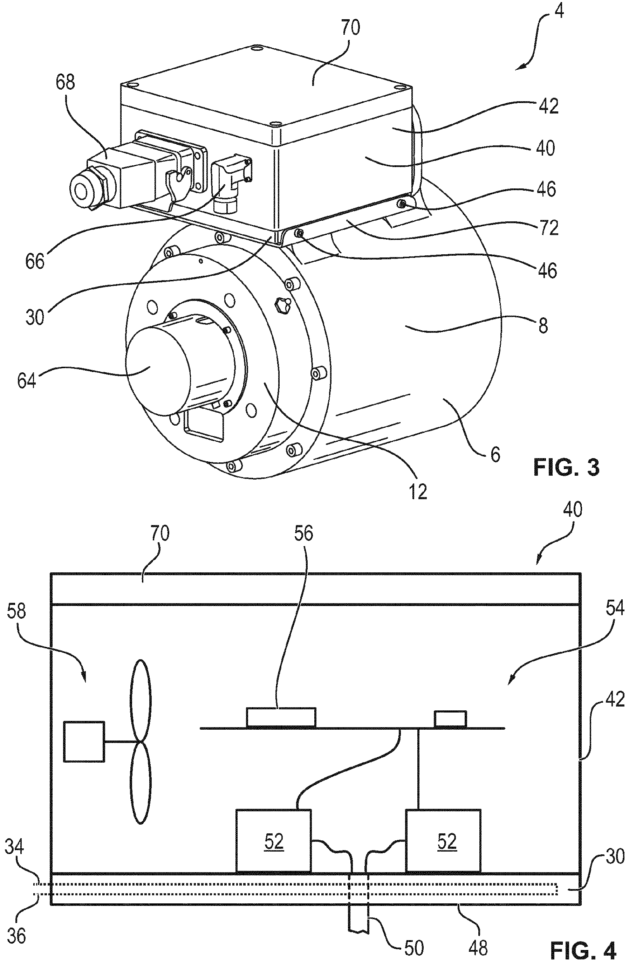

In Fig. 2 ist mit Blick auf das A-seitige Lagerschild 14 perspektivisch eine weitere Ausgestaltungsform des Antriebs 4 gezeigt, die in Fig. 3 in einer weiteren Perspektive mit Blick auf den Topfboden 12 des Motorgehäuses 8 des Elektromotors 6 dargestellt ist. An dem Topfboden 12 ist ein Drehgeber 64 angebunden, mittels dessen bei Betrieb eine Drehzahl der Hohlwelle 18 ermittelt wird. Der Drehgeber 64 ist mit einem Drehgeberanschluss 66 des Umrichters 40 signaltechnisch und elektrisch mittels eines nicht näher dargestellten Kabels verbunden, wobei der Drehgeberanschluss 66 sich außerhalb des quaderförmig ausgestalteten Umrichtergehäuses 42 befindet. Ferner weist der Umrichter 40 einen Stromanschluss 68 auf, der außerhalb des Umrichtergehäuses 42 an diesem angebunden ist. Mittels des Stromanschlusses 68 erfolgt ein Anschluss der Elektronik 54 an das Versorgernetzwerk. Ebenfalls werden über den Stromanschluss 68 Steuerbefehle an den Umrichter 40 von einer Prozesssteuerung bei Betrieb übertragen.

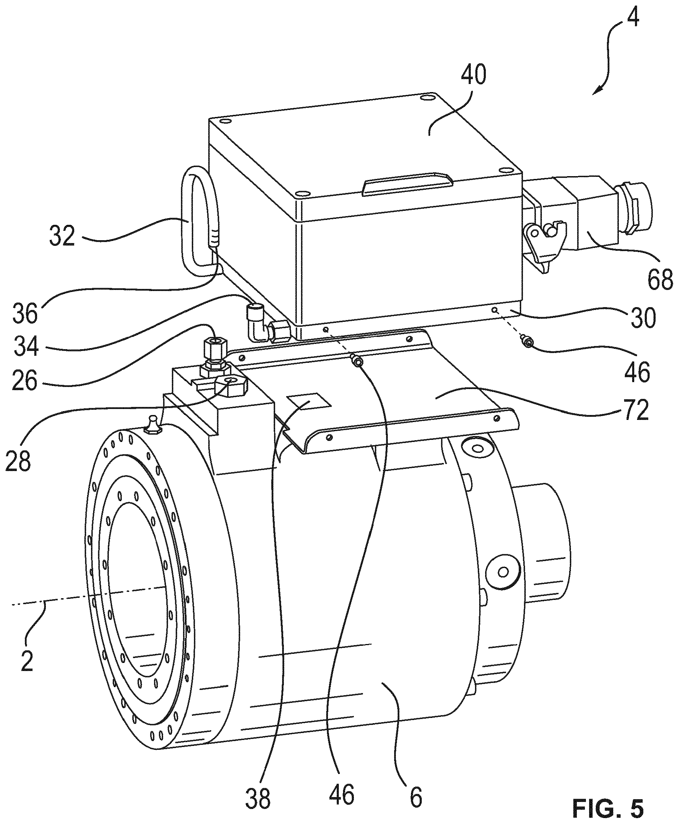

In Abweichung zu der obigen Ausführungsform ist die Kühlplatte 30 ein Bestandteil des Umrichtergehäuses 42 des Umrichters 40, der in Fig. 4 schematisch gezeigt ist. In Fig. 5 ist der Antrieb 4 mit von dem Elektromotor 6 gelösten Umrichter 40 dargestellt. Die Kühlplatte 30 bildet die Wand 48 des Umrichtergehäuses 42, an der die Leistungshalbleiterschalter 52 mechanisch direkt anliegen und thermisch mit dieser kontaktiert sind. Die Leistungshalbleiterschalter 52 werden wiederum mittels der Steuerschaltung 56 der Elektronik 54 gesteuert, und auch dieses Umrichtergehäuse 42 ist luftdicht ausgestaltet, wobei der Lüfter 58 innerhalb des Umrichtergehäuses 42 angeordnet ist. Ferner wird der Lüfter 58 mittels der Steuerschaltung 56 gesteuert. Das Umrichtergehäuse 42 ist auf der der Kühlplatte 30 gegenüberliegenden Seite mittels eines Deckels70 verschlossen, wobei der Deckel 70 lösbar mittels Schrauben an weiteren Bestandteilen des Umrichtergehäuses 42 befestigt ist. Mittels Abnahme des Deckels 70 ist ein Austausch der Elektronik 54 oder des Lüfters 58 ermöglicht.

Die Kühlplatte 30 weist wiederum den Kühlkanal 32 mit dem Zufluss 34 und dem Abfluss 36 auf, und durch die Kühlplatte 30 sind elektrische Leitungen geführt, die mit dem Stecker 50 der Wand 48 und den Leistungshalbleiterschaltern 52 kontaktiert sind. Im Montagezustand ist der Kühlkanal 32 der Kühlplatte 30 mit dem Kühlkanal 24 des Elektromotors 6 verbunden. Hierbei mündet der Abfluss 36 des Kühlkanals 32 der Kühlplatte 30 in den Zufluss 26 des Kühlkanals 24 des Elektromotors 6.

Das Motorgehäuse 8 weist eine an dem hohlzylindrischen Abschnitt 10 angeformte und tangential zu diesem angeordnete Halteplatte 72 auf, die senkrecht zur Rotationsachse 2 einen U-förmigen Querschnitt aufweist und im Montagezustand die Kühlplatte 30 umgreift. Somit umgreift die Halteplatte 72 das Umrichtergehäuse 42 teilweise, und das Umrichtergehäuse 42 wird mittels der Halteplatte 72 stabilisiert, sodass die fluidtechnische Verbindung zwischen den beiden Kühlkanälen 24, 32 vergleichsweise gering belastet ist. Die Halteplatte 72 weist ferner den ersten Stecker 38 auf, der mit den Phasen des Stators 22 elektrisch kontaktiert ist. Somit sind wiederum mittels der beiden Stecker 38, 50 die Leistungshalbleiterschalter 52 mit dem Stator 22 elektrisch kontaktiert. Im Montagezustand ist ferner die Halteplatte 72 mittels insgesamt vier Schrauben 46 mit der Kühlplatte 30 verschraubt. Zum Austausch des Umrichters 40 ist somit ein Lösen der mittels des Drehgeberanschlusses 66 und des Stromflusses 68 erstellten Verbindungen erforderlich. Zudem ist ein Ablassen der Kühlflüssigkeit und ein Lösen der beiden Kühlkanäle 24, 32 erforderlich. Nach Entfernen der Schrauben 46 kann der Umrichter 40 von dem Elektromotor 6 entfernt und durch einen neuen ausgetauscht werden, beispielsweise bei einer Fehlfunktion des Umrichters 40.

Zusammenfassend ist der Antrieb 4 dezentral und weist somit den Elektromotor 6 mit der integrierten Betriebselektronik in Form des Umrichters 4 auf. Folglich sind ein Verdrahtungsaufwand und ein Platzbedarf reduziert. Hierbei ist der Umrichter 40 lösbar von dem Elektromotor 6 ausgestaltet. Somit ist es ermöglicht, im Fehlerfall den Umrichter 40 auszutauschen, ohne dass es erforderlich ist, den Elektromotor 6 auszubauen, der mit der gewünschten Applikation der Industrieanlage mechanisch fest verbunden ist.

Bei der ersten Ausführung bildet die Kühlplatte 30, die der Kühlung des Umrichters 40 dient, und der Elektromotor 6 eine feste Einheit. Zur Montage wird der Umrichter 40 auf die Kühlplatte 30 montiert, wobei eine vergleichsweise effiziente thermisehe Verbindung realisiert wird, beispielsweise mittels Wärmeleitpaste. Auch bei einer vergleichsweise ineffizienten Anbindung ist dennoch ein sicherer Betrieb des Antriebs 4 ermöglicht, da die Leistungselektronik, insbesondere der Leistungshalbleiterschalter 52, einen besseren Wirkungsgrad aufweist als der Elektromotor 6. Somit ist die aus dem Umrichter 40 abzuleitende Verlustwärme kleiner als die von dem Elektromotor 6 erzeugt Wärme. Beim Austausch des Umrichters 40 ist es lediglich erforderlich, dass etwaige elektrische Leitungen getrennt werden. Ein Auftrennen der Kühlkanäle 24, 32 hingegen ist nicht erforderlich. Auch ist ein Ablassen einer Kühlflüssigkeit nicht notwendig. Somit sind eine Demontage des Umrichters 40 und eine Montage eines neuen Umrichters vergleichsweise einfach und sicher. Zudem treten keine Probleme aufgrund einer etwaigen Undichtigkeit des Kühlsystems auf. Ferner ist der Umrichter vergleichsweise klein, leicht und kostengünstig.

In einer weiteren Ausführung ist die Kühlplatte 30 ein Bestandteil des Umrichters 40, und der Umrichter 40 selbst ist insbesondere eine geschlossene Einheit, die die Leistungshalbleiterschalter 42 sowie die Steuerschaltung 56 umfasst. Bei Austausch des Umrichters 40 ist ein Auftrennen der Verbindung der beiden Kühlkanäle 24, 32 erforderlich. Zudem ist ein Trennen der elektrischen Leitungen erforderlich, die beispielsweise mittels der beiden Stecker 38, 50 sowie des Stromanschluss 68 und des Geberanschluss 66 realisiert sind.

Die Halteplatte 72 ist insbesondere eine Coldplate. Mittels des Antriebs 4 ist ferner eine Kombination der Wasserkühlung der Leistungshalbleiterschalter 52, insbesondere der IGBTs, und dem intern in dem Umrichtergehäuse 42 angeordneten Lüfter 58 realisiert. Hierbei werden insbesondere weitere Bauteile der Elektronik 54, wie die Steuerschaltung 56 mit dem mittels des Lüfters 58 erstellten Luftstroms beaufschlagt. Somit erfolgt eine Kühlung der Elektronik 54, wobei ein vergleichsweise hoher Schutz vor Kurzschlüssen oder Verletzungen realisiert ist.

Ferner ist der flüssigkeitsgekühlte Antrieb 4 auf eine vergleichsweise einfache Austauschbarkeit des Umrichters 40 ausgelegt. Da der Elektromotor 6 ein Torque-Motor ist, ist der Umrichter 40 vergleichsweise klein und weist somit vergleichsweise geringe Abmessungen auf. Ferner wird eine vergleichsweise geringe Verlustleistung erzielt, die mittels der Kühlplatte 30 vergleichsweise effizient abgeführt werden kann.

Die Erfindung ist nicht auf die vorstehend beschriebenen Ausführungsbeispiele beschränkt. Vielmehr können auch andere Varianten der Erfindung von dem Fachmann hieraus abgeleitet werden, ohne den Gegenstand der Erfindung, wie in den Ansprüchen definiert, zu verlassen. Insbesondere sind ferner alle im Zusammenhang mit den einzelnen Ausführungsbeispielen beschriebene Einzelmerkmale auch auf andere Weise miteinander kombinierbar, ohne den Gegenstand der Erfindung, wie in den Ansprüchen definiert, zu verlassen.

### Bezugszeichenliste

- 2: Rotationsachse
- 4: Antrieb
- 6: Elektromotor
- 8: Motorgehäuse
- 10: hohlzylindrischer Abschnitt
- 12: Topfboden
- 14: A-seitiges Lagerschild
- 16: Lager
- 18: Hohlwelle
- 20: Rotor
- 22: Stator
- 24: Kühlkanal des Elektromotors
- 26: Zufluss des Kühlkanals des Elektromotors
- 28: Abfluss des Kühlkanals des Elektromotors
- 30: Kühlplatte
- 32: Kühlkanal der Kühlplatte
- 34: Zufluss des Kühlkanals der Kühlplatte
- 36: Abfluss des Kühlkanals der Kühlplatte
- 38: erster Stecker
- 40: Umrichter
- 42: Umrichtergehäuse
- 44: Lasche
- 46: Schraube
- 48: Wand
- 50: zweiter Stecker
- 52: Leistungshalbleiterschalter
- 54: Elektronik
- 56: Steuerschaltung
- 58: Lüfter
- 60: weiterer Elektromotor
- 62: Lüfterrad
- 64: Drehgeber
- 66: Drehgeberanschluss
- 68: Stromanschluss
- 70: Deckel
- 72: Halteplatte

## Patentansprüche

1. Antrieb (4), insbesondere Torque-Antrieb,
- mit einem ein Motorgehäuse (8) aufweisenden, flüssigkeitsgekühlten Elektromotor (6), und
- mit einem ein Umrichtergehäuse (42) aufweisenden, flüssigkeitsgekühlten Umrichter (40), wobei das Umrichtergehäuse (42) lösbar an dem Motorgehäuse (8) angebunden ist, sowie
- mit einer Kühlplatte (30), die außerhalb des Motorgehäuses (8) angeordnet ist, und die einen Kühlkanal (32) mit einem Zufluss (34) und einem Abfluss (36) aufweist, wobei der Abfluss (36) fluidtechnisch mit einem Zufluss (26) eines Kühlkanals (24) des Elektromotors (6) verbunden ist, wobei die Kühlplatte (30) zumindest teilweise eine Wand (48) des Umrichtergehäuses (42) bildet, wobei die Kühlplatte (30) mit einer Halteplatte (72) des Motorgehäuses (8) verschraubt ist, und wobei die Halteplatte (72) das Umrichtergehäuse (42) teilweise umgreift.

2. Antrieb (4) nach Anspruch 1,
**dadurch gekennzeichnet,**
**dass** innerhalb des Umrichtergehäuses (42) ein Lüfter (58) angeordnet ist.

3. Antrieb (4) nach Anspruch 2,
**dadurch gekennzeichnet,**
**dass** das Umrichtergehäuse (42) luftdicht ist.

4. Antrieb (4) nach einem der Ansprüche 1 bis 3,
**dadurch gekennzeichnet,**
**dass** der Elektromotor (6) eine Hohlwelle (18) aufweist.

## Claims

1. Drive (4), in particular torque drive,
- comprising a liquid-cooled electric motor (6) having a motor housing (8), and
- comprising a liquid-cooled converter (40) having a converter housing (42), wherein the converter housing (42) is detachably joined to the motor housing (8), and
- comprising a cooling plate (30) which is arranged outside the motor housing (8) and which has a cooling duct (32) with an inflow (34) and an outflow (36), wherein the outflow (36) is fluidically connected to an inflow (26) of a cooling duct (24) of the electric motor (6), wherein the cooling plate (30) at least partially forms a wall (48) of the converter housing (42), wherein the cooling plate (30) is screwed to a retaining plate (72) of the motor housing (8), and wherein the retaining plate (72) partially engages around the converter housing (42).

2. Drive (4) according to Claim 1,
**characterized**
**in that** a fan (58) is arranged inside the converter housing (42).

3. Drive (4) according to Claim 2,
**characterized**
**in that** the converter housing (42) is air-tight.

4. Drive (4) according to one of Claims 1 to 3, **characterized**
**in that** the electric motor (6) has a hollow shaft (18).

## Revendications

1. Entraînement (4), en particulier entraînement par couple, ledit entraînement comprenant
- un boîtier de moteur (8) comportant un moteur électrique (6) refroidi par liquide, et
- un convertisseur (40), refroidi par liquide, qui comporte un boîtier de convertisseur (42), le boîtier de convertisseur (42) étant relié de manière amovible au boîtier de moteur (8), et
- une plaque de refroidissement (30) qui est disposée à l'extérieur du boîtier de moteur (8) et qui comporte un canal de refroidissement (32) pourvu d'une entrée (34) et d'une sortie (36), la sortie (36) étant reliée fluidiquement à une entrée (26) d'un canal de refroidissement (24) du moteur électrique (6), la plaque de refroidissement (30) formant au moins partiellement une paroi (48) du boîtier de convertisseur (42), la plaque de refroidissement (30) étant vissée à une plaque de retenue (72) du boîtier de moteur (8), et la plaque de retenue (72) s'engageant partiellement autour du boîtier de convertisseur (42).

2. Entraînement (4) selon la revendication 1, **caractérisé en ce qu'**un ventilateur (58) est disposé à l'intérieur du boîtier de convertisseur (42).

3. Entraînement (4) selon la revendication 2, **caractérisé en ce que** le boîtier de convertisseur (42) est étanche à l'air.

4. Entraînement (4) selon l'une des revendications 1 à 3,
**caractérisé en ce que** le moteur électrique (6) comporte un arbre creux (18).
